# EUROPEAN PATENT APPLICATION

(11) **EP 4 741 362 A1**
(43) Date of publication of application: **13.05.2026**
(21) Application number: 24835876.4
(22) Date of filing: 14.06.2024
(51) Int. Cl.: C04B 28/02, C04B 24/12, C04B 40/02

(54) **CEMENT COMPOSITION FOR FIXING CARBON DIOXIDE, CEMENT HARDENED BODY FOR FIXING CARBON DIOXIDE, AND METHOD FOR FIXING CARBON DIOXIDE**

(30) Priority: 04.07.2023 JP 2023110225
(71) Applicant: Shimizu Corporation, Chuo-ku Tokyo 104-8370 (JP); National University Corporation Hokkaido University, Hokkaido 060-0808 (JP)
(72) Inventor: SAITO, Ryosuke, Tokyo 104-8370 (JP); YODA, Yuya, Tokyo 104-8370 (JP); YANO, Keiichi, Tokyo 104-8370 (JP); TSUJINO, Masato, Tokyo 104-8370 (JP); NISHIDA, Akira, Tokyo 104-8370 (JP); KITAGAKI, Ryoma, Sapporo-shi, Hokkaido 060-0808 (JP); ELAKNES, Yogarajah, Sapporo-shi, Hokkaido 060-0808 (JP); SENBOKU, Hisanori, Sapporo-shi, Hokkaido 060-0808 (JP); SAKAIRI, Masatoshi, Sapporo-shi, Hokkaido 060-0808 (JP); FUSHIMI, Koji, Sapporo-shi, Hokkaido 060-0808 (JP)
(74) Representative: Eisenführ Speiser
(86) International application number: PCT/JP2024/021674
(87) International publication number: WO 2025/009361

(57) **Abstract**

A cement composition for carbon dioxide fixation, comprising a cement composition and a carbon dioxide absorbing liquid containing a carbon dioxide absorbent. A hardened cement for carbon dioxide fixation, comprising a hardened cement and a carbonate supported on the hardened cement. A carbon dioxide fixation method comprising: mixing a cement composition with a carbon dioxide absorbing liquid containing a carbon dioxide absorbent; hardening the cement composition containing the carbon dioxide absorbent to obtain a hardened cement for carbon dioxide fixation; and contacting the hardened cement with atmospheric air to fix the carbon dioxide contained in the atmospheric air in the hardened cement.

## Description

### TECHNICAL FIELD

The present invention relates to a cement composition for carbon dioxide fixation, a hardened cement for carbon dioxide fixation, and a carbon dioxide fixation method.

Priority is claimed on Japanese Patent Application No. 2023-110225, filed July 4, 2023, the contents of which are incorporated herein by reference.

### BACKGROUND ART

For the purpose of preventing global warming, there is a global demand for reducing carbon dioxide (CO₂) emissions. In the construction materials field, proposals have been made on a method to reduce the amount of CO₂ generated during concrete production by reducing the amount of cement, as well as concrete-related technologies that can fix (absorb) CO₂ (see, for example, Patent Document 1).

With regard to technologies for accelerating the fixation of CO₂ in newly constructed concrete, for example, the technology described in Patent Document 2 is known. The technology described in Patent Document 2 accelerates carbonation from the surface by exposing a concrete structure that is not yet fully carbonated, such as newly constructed concrete, to a high-concentration CO₂ gas environment.

### Citation List

### Patent Document

Patent Document 1: Japanese Patent Granted Publication No. 4822373
Patent Document 2: Japanese Unexamined Patent Application Publication No. 2014-51422

### SUMMARY OF INVENTION

### Technical Problem

For carrying out carbonation treatment, it is necessary to cure the periphery of the concrete structure with a sheet or the like so that CO₂ gas does not leak to the outside. This method is not always easy depending on the shape of the concrete structure, and there is a concern that CO₂ gas may leak to the outside.

The present invention has been made in view of the above circumstances, and an object thereof is to provide a cement composition for carbon dioxide fixation, a hardened cement for carbon dioxide fixation, and a carbon dioxide fixation method, which allow carbon dioxide to be fixed without leaking to the outside.

### Solution to Problem

Embodiments of the present invention made in order to solve the above-mentioned problem are as enumerated below.
[1] A cement composition for carbon dioxide fixation, comprising a cement composition and a carbon dioxide absorbing liquid containing a carbon dioxide absorbent.
[2] The cement composition according to [1], wherein the carbon dioxide absorbing liquid has a pH of 8.0 or higher at 20°C.
[3] The cement composition according to [1] or [2], wherein the carbon dioxide absorbing liquid contains carbon dioxide.
[4] The cement composition according to any one of [1] to [3], wherein an amount of the carbon dioxide absorbing liquid is 0.01 parts by mass or more and 100 parts by mass or less per 100 parts by mass of cement contained in the cement composition.
[5] The cement composition according to any one of [1] to [4], wherein the carbon dioxide absorbent is an alkaline compound.
[6] The cement composition according to any one of [1] to [5], wherein an amount of the carbon dioxide absorbent is 0.1 parts by mass or more and less than 5 parts by mass per 100 parts by mass of the cement composition.
[6-1] The cement composition according to any one of [1] to [6], wherein an amount of the carbon dioxide absorbent is 0.1 to 4 parts by mass, 0.2 to 3. 5 parts by mass, 0.3 to 3 parts by mass, 0.4 to 3 parts by mass, 0.45 to 2.5 parts by mass, 0.45 to 2.0 parts by mass, or 0.45 to 1.5 parts by mass, per 100 parts by mass of the cement composition.
[7] The cement composition according to any one of [1] to [6-1], wherein an amount of the carbon dioxide absorbent is 0.1 to less than 5 parts by mass, per 100 parts by mass of the cement composition, and the carbon dioxide absorbing liquid contains carbon dioxide.
[8] The cement composition according to any one of [1] to [7], wherein the carbon dioxide absorbent is an amine compound, an amount of the carbon dioxide absorbent is 0.1 parts by mass or more and less than 5 parts by mass per 100 parts by mass of the cement composition, and the carbon dioxide absorbing liquid contains carbon dioxide.
[9] A hardened cement for carbon dioxide fixation, comprising a hardened cement and a carbonate supported on the hardened cement.
[10] The hardened cement according to [9], wherein an amount of the carbonate is 0 parts by mass or more and 50 parts by mass or less per 100 parts by mass of the hardened cement.
[11] The hardened cement according to [9] or [10], wherein the hardened cement is concrete.
[12] A carbon dioxide fixation method comprising:
   mixing a cement composition with a carbon dioxide absorbing liquid containing a carbon dioxide absorbent;
   hardening the cement composition containing the carbon dioxide absorbent to obtain a hardened cement for carbon dioxide fixation; and
   contacting the hardened cement with atmospheric air to fix the carbon dioxide contained in the atmospheric air in the hardened cement.
[13] A carbon dioxide fixation method comprising:
   mixing a cement composition with a carbon dioxide absorbing liquid containing a carbon dioxide absorbent and a pre-dissolved carbon dioxide;
   hardening the cement composition containing the carbon dioxide absorbent to obtain a hardened cement for carbon dioxide fixation; and
   contacting the hardened cement with atmospheric air to fix the carbon dioxide contained in the atmospheric air in the hardened cement.

### Advantageous Effects of Invention

The present invention can provide a cement composition for carbon dioxide fixation, a hardened cement for carbon dioxide fixation, and a carbon dioxide fixation method, which allow carbon dioxide to be fixed without leaking to the outside.

### BRIEF DESCRIPTION OF DRAWINGS

FIGS. 1 is a diagram showing the relationship between the amount of bleeding and elapsed time (minutes) based on a bleeding test of the cement composition for carbon dioxide fixation in Experimental Example 3.
FIG. 2 is a diagram showing the setting rate of the cement composition for carbon dioxide fixation in Experimental Example 4.
FIG. 3 is a diagram showing the setting rate of the cement composition for carbon dioxide fixation in Experimental Example 5.
FIG. 4 is a diagram showing the calcium carbonate content in the hardened cement for carbon dioxide fixation in Experimental Example 6.
FIG. 5 is a diagram showing the calcium carbonate content in the hardened cement for carbon dioxide fixation in Experimental Example 7.
FIG. 6 is a diagram showing the impedance of the hardened cement for carbon dioxide fixation in Experimental Example 8.
FIG. 7 is a diagram showing the compressive strength of the hardened cement body for carbon dioxide fixation in Experimental Example 9.

### DESCRIPTION OF EMBODIMENTS

### [Cement Composition for Carbon Dioxide Fixation]

A cement composition for carbon dioxide fixation according to one embodiment of the present invention contains a cement composition and a carbon dioxide absorption liquid containing a carbon dioxide absorbent.

### "Cement Composition"

A cement composition contains cement and water.
Examples of cement compositions include concrete (ready-mixed concrete), mortar (paste mortar), and cement milk (cement paste).

In the present specification, "concrete" refers to a mixture of cement, fine aggregate (sand), and coarse aggregate (gravel (crushed stone)), mixed with water.

In the present specification, "mortar" refers to a product obtained by kneading a mixture of cement and fine aggregate (sand) with water.

In the present specification, "cement milk" refers to a product obtained by kneading cement with water only.

In the present specification, "cement" refers to a powder that is mainly composed of limestone, clay, silica stone, iron oxide raw materials, and the like, and that hardens by a chemical reaction with water.

In the present specification, "fine aggregate" refers to sand having a particle diameter of 5 mm or less.

In the present specification, "coarse aggregate" refers to gravel (crushed stone) having a particle diameter exceeding 5 mm, and the particle diameter of the coarse aggregate is preferably 25 mm or less.

The mixing ratio among cement, fine aggregate, and coarse aggregate in concrete can be appropriately determined depending on the strength required for the concrete. The mixing ratio among cement, fine aggregate, and coarse aggregate is preferably, in terms of mass ratio, 2 to 3 parts of fine aggregate and 4 to 6 parts of coarse aggregate per 1 part of cement.

The mixing ratio between cement and fine aggregate in mortar can be appropriately determined depending on the strength required for the mortar. The mixing ratio between cement and fine aggregate is preferably, in terms of mass ratio, 2 to 4 parts of fine aggregate per 1 part of cement.

### "Carbon Dioxide Absorbing Liquid"

The carbon dioxide absorbing liquid is a liquid comprising a carbon dioxide absorbent capable of absorbing carbon dioxide, and a solvent. The carbon dioxide absorbing liquid has physical properties such as viscosity that allow it to be kneaded into the cement composition. When the carbon dioxide absorbent is a liquid, the carbon dioxide absorbing liquid may not contain the solvent described later.

The carbon dioxide absorbent is preferably present in the carbon dioxide absorbing liquid in an amount of, for example, 0.01 % by mass or more based on the total mass of the carbon dioxide absorbing liquid, more preferably 1 % by mass or more, and even more preferably 5 % by mass or more. When the amount of the carbon dioxide absorbent is not less than the lower limit value described above, the amount of carbon dioxide that can be fixed can be further increased.

From the viewpoint of increasing the compressive strength of the hardened cement for carbon dioxide fixation obtained by hardening the cement composition for carbon dioxide fixation, the concentration of the carbon dioxide absorbent in the carbon dioxide absorbing liquid is preferably 1 % by mass or more and less than 5 % by mass, based on the total mass of the carbon dioxide absorbing liquid.

Examples of the solvent contained in the carbon dioxide absorbing liquid include water and organic solvents such as ethanol.

Water is preferred as the solvent because it is less volatile at room temperature and easily dissolves the carbon dioxide absorbent.

With respect to these solvents, a single type thereof may be used individually or two or more types thereof may be used in combination.

The solvent is preferably present in the carbon dioxide absorbing liquid in an amount of, for example, 25 % by mass to 99.99 % by mass, based on the total mass of the carbon dioxide absorbing liquid, more preferably 50 % by mass to 99 % by mass, and even more preferably 75 % by mass to 95 % by mass. When the amount of the solvent is not less than the lower limit value described above, the amount of the carbon dioxide absorbing liquid that permeates into the cement composition can be further increased. When the amount of the solvent is not more than the upper limit value described above, the amount of the carbon dioxide absorbent can be further increased. Accordingly, the amount of carbon dioxide that can be fixed can be further increased.

The viscosity of the carbon dioxide absorbing liquid at 25°C is preferably 1000 mPa·s or less, more preferably 50 mPa·s or less, and even more preferably 10 mPa·s or less. When the viscosity of the carbon dioxide absorbing liquid at 25°C is not less than the lower limit value described above, the carbon dioxide absorbing liquid tends to disperse easily into the cement composition, making the production of the cement composition easier.

The viscosity of the carbon dioxide absorbing liquid at 25°C can be determined, for example, by a method in which the temperature of the measurement target is set to 25°C, rotor No. 2 of a B-type viscometer is used and rotated at 60 rpm, and the value 30 seconds after the start of rotation of the rotor is read.

The pH of the carbon dioxide absorbing liquid at 20°C is preferably 7. 0 or more, more preferably 8.5 or more, and even more preferably 10.0 or more. When the pH at 20°C is not less than the lower limit value described above, the rate of absorbing carbon dioxide can be further increased. There is no particular limitation on the upper limit of the pH at 20°C, but in consideration of ease of handling, the upper limit may be, for example, 14. 0.

From the viewpoint of increasing the compressive strength of the hardened cement for carbon dioxide fixation obtained by hardening the cement composition for carbon dioxide fixation, the pH of the carbon dioxide absorbing liquid at 20°C is preferably 7 to 10, more preferably 7 to 9, and even more preferably 7 to 8.

The pH of the carbon dioxide absorbing liquid at 20°C can be measured by a method in which the temperature of the measurement target is adjusted to 20°C and a pH meter (for example, a compact pH meter LAQUAtwin^{®} pH-22B manufactured by HORIBA, Ltd.) is used.

The carbon dioxide absorbing liquid may contain carbon dioxide.

The larger the amount of carbon dioxide, the more carbon dioxide can be fixed in the cement composition for carbon dioxide fixation during its production.

The amount of carbon dioxide is preferably 1.0 mol % or more, more preferably 10.0 mol % or more, and even more preferably 50.0 mol % or more with respect to the molar equivalent of nitrogen atoms in the carbon dioxide absorbent. The amount of carbon dioxide is preferably such that the pH of the carbon dioxide absorbing liquid at 20°C falls within the above-described range. When the carbon dioxide absorbing liquid contains carbon dioxide, the carbon dioxide exists in the carbon dioxide absorbing liquid as carbonate ions or bicarbonate ions.

There is no particular limitation regarding the method for incorporating carbon dioxide into the carbon dioxide absorbing liquid; examples include a method in which carbon dioxide gas is bubbled and dissolved into the carbon dioxide absorbing liquid, and a method in which dry ice (solid) is added into the carbon dioxide absorbing liquid.

The amount of the carbon dioxide absorbing liquid is preferably 0.01 parts by mass to 100 parts by mass, more preferably 30 parts by mass to 65 parts by mass, per 100 parts by mass of cement contained in the cement composition. When the carbon dioxide absorbing liquid is present in the cement composition for carbon dioxide fixation in an amount equal to or greater than the above lower limit, the amount of carbon dioxide that can be fixed can be further increased. When the carbon dioxide absorbing liquid is present in the cement composition for carbon dioxide fixation in an amount equal to or less than the above upper limit, the amount of the carbon dioxide absorbent that adheres to the hardened cement for carbon dioxide fixation obtained by hardening the cement composition for carbon dioxide fixation can be maintained.

The amount of the carbon dioxide absorbing liquid in the cement composition for carbon dioxide fixation can be adjusted depending on the type of the cement composition, the type of the carbon dioxide absorbent, and combinations thereof.

### "Carbon Dioxide Absorbent"

The carbon dioxide absorbent is contained in the cement composition and absorbs carbon dioxide in the atmosphere. Accordingly, carbon dioxide in the atmosphere is taken into the hardened cement for carbon dioxide fixation obtained by hardening the cement composition for carbon dioxide fixation, thereby reducing the concentration of carbon dioxide in the atmosphere. That is, the atmospheric carbon dioxide can be fixed into the hardened cement for carbon dioxide fixation. The carbon dioxide absorbent may be a solid or a liquid at normal temperature and normal pressure.

In the present specification, "normal temperature" means a standard atmospheric temperature, for example, 15°C to 25°C. "Normal pressure" means a standard atmospheric pressure, for example, 1 atm (1013 hPa).

Examples of the carbon dioxide absorbent include alkaline compounds.

Here, "alkaline compound" refers to a compound whose pH becomes greater than 7 when dissolved in water.

The alkaline compound may be an inorganic compound, an organic compound, or a mixture thereof.

Examples of inorganic alkaline compounds include calcium hydroxide, magnesium hydroxide, sodium silicate, potassium silicate, lithium silicate, lithium nitrite, calcium nitrite, and the like.

Examples of organic alkaline compounds include arginine, lysine, urea, sodium acetate, potassium acetate, amine compounds, and the like.
The carbon dioxide absorbent is preferably one in which a decrease in pH is less likely to occur when reacting with CO₂.

With respect to the carbon dioxide absorbent, a single type thereof may be used alone or two or more types thereof may be used in combination.

Examples of amine compounds include aliphatic amines and aromatic amines.

Among these, aliphatic amines are preferred because they are easily dissolved in water.

Examples of aliphatic amines include alkylamines and alkanolamines.

Examples of alkylamines include methylamine, dimethylamine, trimethylamine, ethylamine, diethylamine, triethylamine, propylamine, butylamine, and the like.

Examples of alkanolamines include monoethanolamine (MEA), diethanolamine (DEA), triethanolamine (TEA), mono-isopropanolamine (MIPA), di-isopropanolamine (DIPA), tri-isopropanolamine (TIPA), N-methylethanolamine (MMEA), N-methyldiethanolamine (MDEA), and the like.

The amine compound may be a primary amine, a secondary amine, a tertiary amine, or a quaternary ammonium salt, and may have a cyclic structure.

In addition to the above, examples of the amine compound include dicyclohexylamine (DCHA), dimethylcyclohexylamine (DMCHA), polyetheramine (PEA), diglycolamine (DGA), 2-amino-2-methyl-1-propanol (AMP90), N-methyl-2-pyrrolidone (NMP), N,N-dimethylformamide (DMF), pyrrolidine, piperidine, piperazine (PZ), morpholine, and the like.

One of these amine compounds may be used alone, or two or more thereof may be used in combination.

Amine compounds have an effect of inhibiting the corrosion of steel materials such as carbon steel. Therefore, when the hardened cement is a reinforced concrete, the amine compound can inhibit corrosion of reinforcing bars in the reinforced concrete. In general, when a reinforced concrete absorbs carbon dioxide, neutralization progresses, and it is known that reinforcing bars are at risk of corrosion due to a decrease in pH. By supporting (carrying) the amine compound in the hardened cement, the above risk can be reduced. From these viewpoints, amine compounds are preferred as the carbon dioxide absorbent.

The carbon dioxide absorbent in the cement composition for carbon dioxide fixation is preferably present in an amount of 1 part by mass or more, more preferably 5 parts by mass or more, per 100 parts by mass of cement contained in the cement composition. When the carbon dioxide absorbent is present in an amount equal to or greater than the above lower limit, the amount of carbon dioxide that can be fixed can be further increased.

From the viewpoint of increasing the compressive strength of the hardened cement body for carbon dioxide fixation obtained by hardening the cement composition for carbon dioxide fixation, the carbon dioxide absorbent is preferably present in the cement composition for carbon dioxide fixation in an amount of 0.1 parts by mass or more and less than 5 parts by mass, more preferably 0.1 to 4 parts by mass, more preferably 0.2 to 3.5 parts by mass, more preferably 0.3 to 3 parts by mass, more preferably 0.4 to 3 parts by mass, more preferably 0.45 to 2.5 parts by mass, more preferably 0.45 to 2.0 parts by mass, and even more preferably 0.45 to 1.5 parts by mass, per 100 parts by mass of the cement composition for carbon dioxide fixation. Further, from the viewpoint of increasing the compressive strength of the hardened cement, it is preferred that the carbon dioxide absorbing liquid contains carbon dioxide as described above, in addition to the carbon dioxide absorbent amount being within the above range.

The amount of the carbon dioxide absorbent can be adjusted depending on the type of the cement composition, the type of the carbon dioxide absorbent, and combinations thereof.

### [Method for Producing Cement Composition for Carbon Dioxide Fixation]

The cement composition for carbon dioxide fixation of the present embodiment is obtained by kneading the cement composition and the carbon dioxide absorbing liquid. By kneading the carbon dioxide absorbing liquid into the cement composition, the carbon dioxide absorbing liquid is dispersed substantially uniformly throughout the cement composition, and the carbon dioxide absorbent in the carbon dioxide absorbing liquid becomes supported on the cement composition.

The method for kneading the cement composition and the carbon dioxide absorbing liquid is not particularly limited, and for example, a method using a twin-shaft compulsory mixer may be used.

When the carbon dioxide absorbing liquid contains carbon dioxide, the carbon dioxide absorbing liquid is supplied in advance with carbon dioxide by the above method, and then kneaded with the cement composition.

### [Hardened Cement for Carbon Dioxide Fixation]

The hardened cement for carbon dioxide fixation according to one embodiment of the present invention comprises a hardened cement and a carbonate supported on the hardened cement. In other words, the hardened cement for carbon dioxide fixation of the present embodiment is a carbonate-supported product in which the carbonate is supported on the hardened cement.

In the present specification, "supported" means that the carbonate adheres to either or both of the inside and the surface of the hardened cement.
In the present specification, the hardened cement functions as a so-called carrier.

### "Hardened Cement"

The hardened cement is a hardened product of a cement composition that contains cement and water.

In the present specification, the term "hardened product" refers to a state in which the material has hardened to such an extent that it is not deformed even when pressed with a finger.

As the cement composition, the same cement compositions as those used in the above-described embodiment of the cement composition for carbon dioxide fixation can be used.

The hardened cement is preferably concrete.

### "Carbonate"

Examples of the carbonate include reaction products of the above carbon dioxide absorbent with carbon dioxide and calcium ions in the cement composition or in the hardened cement. Specifically, calcium carbonate (CaCO₃) can be mentioned.

In the hardened cement for carbon dioxide fixation of the present embodiment, the carbonate is preferably present in an amount of 0 parts by mass or more and 50 parts by mass or less per 100 parts by mass of the hardened cement.

The hardened cement for carbon dioxide fixation of the present embodiment may further contain the above carbon dioxide absorbent in addition to the carbonate.

The carbon dioxide absorbent in the hardened cement for carbon dioxide fixation is preferably present in an amount of 0.1 part by mass or more, more preferably 1 part by mass or more, and even more preferably 5 parts by mass or more, per 100 parts by mass of the hardened cement serving as the carrier. When the carbon dioxide absorbent in the hardened cement for carbon dioxide fixation is present in an amount equal to or greater than the above lower limit, the amount of carbon dioxide that can be fixed can be further increased.

From the viewpoint of increasing the compressive strength of the hardened cement for carbon dioxide fixation, the carbon dioxide absorbent in the hardened cement for carbon dioxide fixation is preferably present in an amount of 0.1 part by mass or more and less than 6.5 parts by mass, more preferably 0.1 to 5.2 parts by mass, more preferably 0.2 to 4.6 parts by mass, more preferably 0.3 to 4 parts by mass, more preferably 0.5 to 4 parts by mass, more preferably 0.6 to 2.5 parts by mass, more preferably 0.6 to 2.6 parts by mass, more preferably 0.6 to 2 parts by mass, per 100 parts by mass of the hardened cement for carbon dioxide fixation.

The amount of the carbon dioxide absorbent in the hardened cement for carbon dioxide fixation can be adjusted depending on the type of the hardened cement, the type of the carbon dioxide absorbent, and combinations thereof.

### [Method for Producing Hardened Cement for Carbon Dioxide Fixation]

The hardened cement for carbon dioxide fixation of the present embodiment is obtained by kneading a carbon dioxide absorbing liquid into the cement composition for carbon dioxide fixation of the above-described embodiment, in which the carbon dioxide absorbing liquid contains a carbon dioxide absorbent containing carbon dioxide, and hardening the cement containing the carbon dioxide absorbent. In this manner, the carbonate, which is a reaction product of the carbon dioxide absorbent and carbon dioxide, permeates into the inside (pores) of the hardened cement, and the carbonate is supported on the hardened cement.

After kneading the cement composition for carbon dioxide fixation and the carbon dioxide absorbing liquid, the solvent may be dried away.

### <<Method for Carbon Dioxide Fixation>>

### (First Embodiment)

A method for carbon dioxide fixation according to one embodiment of the present invention includes: a step of kneading a carbon dioxide absorbing liquid containing a carbon dioxide absorbent into a cement composition (hereinafter referred to as "step 1A"); a step of hardening the cement composition containing the carbon dioxide absorbent to obtain a hardened cement for carbon dioxide fixation (hereinafter referred to as "step 2A"); and a step of bringing the hardened cement for carbon dioxide fixation into contact with the atmosphere so that carbon dioxide contained in the atmosphere is fixed in the hardened cement for carbon dioxide fixation (hereinafter referred to as "step 3A").

In step 1A, a carbon dioxide absorbing liquid containing a carbon dioxide absorbent is kneaded into a cement composition to obtain a cement composition for carbon dioxide fixation.

The method for kneading the carbon dioxide absorbing liquid into the cement composition is the same as the method described in the section "Method for Producing Cement Composition for Carbon Dioxide Fixation".

In step 2A, the cement composition for carbon dioxide fixation obtained in step 1A is hardened to obtain a hardened cement for carbon dioxide fixation.

The method for hardening the cement composition for carbon dioxide fixation is the same as the method described in the section "Method for Producing Hardened Cement for Carbon Dioxide Fixation".

In step 3A, by bringing the hardened cement for carbon dioxide fixation into contact with the atmosphere, carbon dioxide contained in the atmosphere is absorbed by the carbon dioxide absorbent contained in the hardened cement for carbon dioxide fixation. Accordingly, carbon dioxide can be fixed in the hardened cement for carbon dioxide fixation.

The method for bringing the hardened cement for carbon dioxide fixation into contact with the atmosphere is not particularly limited, and for example, the hardened cement for carbon dioxide fixation may simply be exposed to the atmosphere.

The period of time during which the hardened cement for carbon dioxide fixation is contacted with the atmosphere is not particularly limited.

The amount of carbon dioxide fixed in the hardened cement for carbon dioxide fixation can be measured, for example, by pyrolysis gas chromatography-mass spectrometry (pyrolysis GC/MS) or the like.

### <<Method for Carbon Dioxide Fixation>>

### (Second Embodiment)

A method for carbon dioxide fixation according to one embodiment of the present invention includes: a step of kneading a carbon dioxide absorbing liquid into a cement composition, in which the carbon dioxide absorbing liquid contains a carbon dioxide absorbent and a pre-dissolved carbon dioxide (hereinafter, "step 1B"); a step of hardening the cement composition containing the carbon dioxide absorbent to obtain a hardened cement for carbon dioxide fixation (hereinafter, "step 2B"); and a step of bringing the hardened cement for carbon dioxide fixation into contact with the atmosphere so that carbon dioxide contained in the atmosphere is fixed in the hardened cement for carbon dioxide fixation (hereinafter, "step 3B").

In step 1B, a cement composition is kneaded with a carbon dioxide absorbing liquid containing a carbon dioxide absorbent and a pre-dissolved carbon dioxide to obtain a cement composition for carbon dioxide fixation.

The method for dissolving carbon dioxide in advance in the carbon dioxide absorbing liquid is the same as the method described in the section "Method for Producing Cement Composition for Carbon Dioxide Fixation".

The method for kneading the carbon dioxide absorbing liquid into the cement composition is the same as the method described in the section "Method for Producing Cement Composition for Carbon Dioxide Fixation".

In step 2B, similarly to step 2A, the cement composition for carbon dioxide fixation obtained in step 1B is hardened to obtain a hardened cement for carbon dioxide fixation.

The method for hardening the cement composition for carbon dioxide fixation is the same as the method described in the section "Method for Producing Hardened Cement for Carbon Dioxide Fixation".

In step 3B, similarly to step 3A, by bringing the hardened cement for carbon dioxide fixation into contact with the atmosphere, carbon dioxide contained in the atmosphere is absorbed by the carbon dioxide absorbent contained in the hardened cement for carbon dioxide fixation. Accordingly, carbon dioxide can be fixed in the hardened cement for carbon dioxide fixation.

Since the cement composition for carbon dioxide fixation of the present embodiment contains a cement composition and a carbon dioxide absorbing liquid containing a carbon dioxide absorbent, it can absorb (fix) carbon dioxide present in the atmosphere. As a result, the concentration of carbon dioxide in the atmosphere can be reduced.

Since the hardened cement for carbon dioxide fixation of the present embodiment has a carbonate supported thereon, it can absorb (fix) carbon dioxide present in the atmosphere. As a result, the concentration of carbon dioxide in the atmosphere can be reduced.

The method for carbon dioxide fixation of the present embodiment can be applied to the hardened cement products which have already been hardened, rather than cement-containing compositions under manufacture. Therefore, the method can be applied to existing hardened cement products and can contribute to reducing the concentration of carbon dioxide in the atmosphere.

Since the method for carbon dioxide fixation of the present embodiment can fix carbon dioxide by a simple impregnation method, it does not require large-scale facilities or construction work.

Since the method for carbon dioxide fixation of the present embodiment can fix carbon dioxide by a simple method, it can be repeatedly applied to existing hardened cement products.

Although the cement composition for carbon dioxide fixation, the hardened cement for carbon dioxide fixation, and the method for carbon dioxide fixation of the present invention have been described above, the present invention is not limited to the above embodiments and can be appropriately modified within the scope not departing from the spirit thereof.

For example, the hardened cement for carbon dioxide fixation may be dried to dry the carbon dioxide absorbing liquid. However, from the viewpoint of further increasing the carbon dioxide absorption efficiency, it is preferable in the method for carbon dioxide fixation not to dry the carbon dioxide absorbing liquid.

For example, when the carbon dioxide absorption ability decreases, such ability can be restored by impregnating the hardened cement again with the carbon dioxide absorbing liquid. The carbon dioxide absorption ability can be judged, for example, by measuring the concentration of carbon dioxide in the atmosphere around the hardened cement for carbon dioxide fixation. Alternatively, a sample of the hardened cement for carbon dioxide fixation may be placed in a container such as a sample bag filled with carbon dioxide, and the absorption ability may be judged from the decrease in the volume of the container accompanying absorption of carbon dioxide.

### EXAMPLES

Hereinbelow, the present invention will be described with reference to Examples which, however, should not be construed as limiting the present invention.

### [Experimental Example 1]

A cement composition for carbon dioxide fixation was obtained by the formulation shown in Table 1. Cement (C) and fine aggregate (S) were charged into a twin-shaft compulsory mixer (manufactured by Taiheiyo Engineering Corporation) and dry-mixed. Then, a carbon dioxide absorbing liquid to which a lignin-based AE water-reducing agent had been added was charged and the resulting was kneaded to form mortar. Next, coarse aggregate (G) was charged and the resulting was kneaded to obtain a cement composition for carbon dioxide fixation.

Using N-methyldiethanolamine (MDEA) or a secondary amine (MAE) as the carbon dioxide absorbent, carbon dioxide absorbing liquids were prepared with the following concentrations: 0 % by mass MDEA/MAE (water), 5 % by mass MDEA, 10 % by mass MDEA, and 5 % by mass MAE.

**[Table 1]**

| Formulation name | W/C | s/a | Weight per unit volume(kg/m³) | | | | | AE water-reducing agent |
|---|---|---|---|---|---|---|---|---|
| | (%) | (%) | C | W | | S | G | |
| | | | | water | mdea | | | (C×%) |
| Control-L | 55 | 48.0 | 300 | 165 | 0 | 877 | 954 | 0.25 |
| MDEA5-L | 55 | 48.0 | 300 | 157 | 8.25 | 877 | 954 | 0.25 |
| MDEA10-L | 55 | 48.0 | 300 | 149 | 16.5 | 877 | 954 | 0.25 |
| MAE5-L | 55 | 48.0 | 300 | 157 | 8.25 | 877 | 954 | 0.25 |

### <Evaluations>

For each of the above cement compositions for carbon dioxide fixation, the air content was measured in accordance with JIS A 1128:2014 "Method of test for air content of fresh concrete by pressure method", and the slump was measured in accordance with JIS A 1101:2014 "Method of test for slump of concrete". The results are shown in Table 2.

**[Table 2]**

| Formulation name | Slump | Air conent | Temperature |
|---|---|---|---|
| | (cm) | (%) | (°C) |
| Control-L | 16.0 | 5.2 | 19.1 |
| MDEA5-L | 15.0 | 5.4 | 20.0 |
| MDEA10-L | 15.5 | 5.0 | 20.0 |
| MAE5-L | 17.0 | 5.5 | 20.0 |

From the results shown in Table 2, it was found that when a lignin-based admixture was used, the slump decreased with MDEA relative to the Control.

### [Experimental Example 2]

A cement composition for carbon dioxide fixation was obtained using the formulation shown in Table 3. The kneading method for the cement composition was the same as in Experimental Example 1, except for the chemical admixture used. In Experimental Example 2, a polycarboxylic acid-based chemical admixture was used as the chemical admixture.

**[Table 3]**

| Formulation name | W/C | s/a | Weight per unit volume(kg/m³) | | | | | AE water-reducing agent |
|---|---|---|---|---|---|---|---|---|
| | (%) | (%) | C | W | | S | G | |
| | | | | water | mdea | | | (C×%) |
| Control-P | 55 | 48.0 | 300 | 165 | 0 | 877 | 954 | 0.6 |
| MDEA5-P | 55 | 48.0 | 300 | 157 | 8.25 | 877 | 954 | 0.6 |
| MDEA10-P | 55 | 48.0 | 300 | 157 | 16.5 | 877 | 954 | 0.6 |
| MAE5-P | 55 | 48.0 | 300 | 157 | 8.25 | 877 | 954 | 0.6 |

### <Evaluations>

For each of the above cement compositions for carbon dioxide fixation, the air content was measured in accordance with JIS A 1128:2014 "Method of test for air content of fresh concrete by pressure method", and the slump was measured in accordance with JIS A 1101:2014 "Method of test for slump of concrete". The results are shown in Table 3.

**[Table 4]**

| Formulation name | Slump | Air volume | Temperature |
|---|---|---|---|
| | (cm) | (%) | (°C) |
| Control-P | 19.0 | 3.7 | 20.9 |
| MDEA5-P | 19.0 | 3.9 | 21.6 |
| MDEA10-P | 19.5 | 4.3 | 21.9 |
| MAE5-P | 20.0 | 3.7 | 21.4 |

From the results shown in Table 3, it was found that when a polycarboxylic acid-based admixture was used, the slump increased with MAE relative to the Control. It was also found that when a polycarboxylic acid-based admixture was used, the change in slump was smaller compared with the case where a lignin-based admixture was used.

### [Experimental Example 3]

A cement composition was prepared by the formulation shown in Table 5, and a cement composition for carbon dioxide fixation was obtained by adding a carbon dioxide absorbing liquid containing a carbon dioxide absorbent to the cement composition. The kneading method for the cement composition was the same as in Experimental Example 1.

Using N-methyldiethanolamine (MDEA) or a secondary amine (MAE) as the carbon dioxide absorbent, carbon dioxide absorbing liquids were prepared with the following concentrations: 0 % by mass MDEA/MAE (water), 5 % by mass MDEA, and 5 % by mass MAE.

**[Table 5]**

| Formulation name | W/C | s/a | Weight per unit volume (kg/m³) | | | | | AE water-reducing agent |
|---|---|---|---|---|---|---|---|---|
| | (%) | (%) | C | W | | S | G | |
| | | | | water | Carbon dioxide absorbe | | | (C×%) |
| Control-L | 55 | 48.0 | 300 | 165 | 0 | 877 | 954 | 0.25 |
| MDEA5-L | 55 | 48.0 | 300 | 157 | 8.25 | 877 | 954 | 0.25 |
| MAE5-L | 55 | 48.0 | 300 | 157 | 8.25 | 877 | 954 | 0.25 |

### <Evaluations>

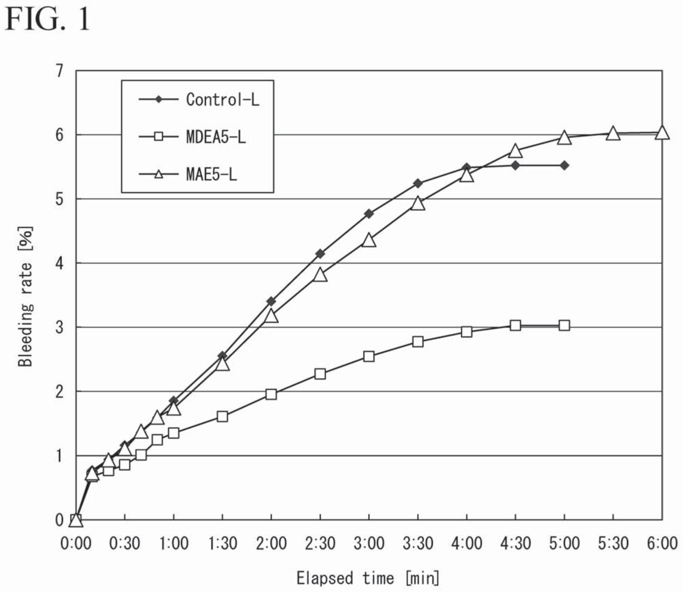

For each of the above cement compositions for carbon dioxide fixation, a bleeding test was conducted in accordance with "Method of Test for Bleeding of Concrete Using Small Container" (JCI-S-015-2018) of the Japan Concrete Institute. The results are shown in FIG. 1. In FIG. 1, the vertical axis indicates the bleeding amount, and the horizontal axis indicates the elapsed time (minutes).

From the results shown in FIG. 1, it was found that the bleeding amount decreased when MDEA was used, whereas it increased when MAE was used.

### [Experimental Example 4]

Four types of cement compositions for carbon dioxide fixation were obtained in the same manner as in Experimental Example 1.

### <Evaluations>

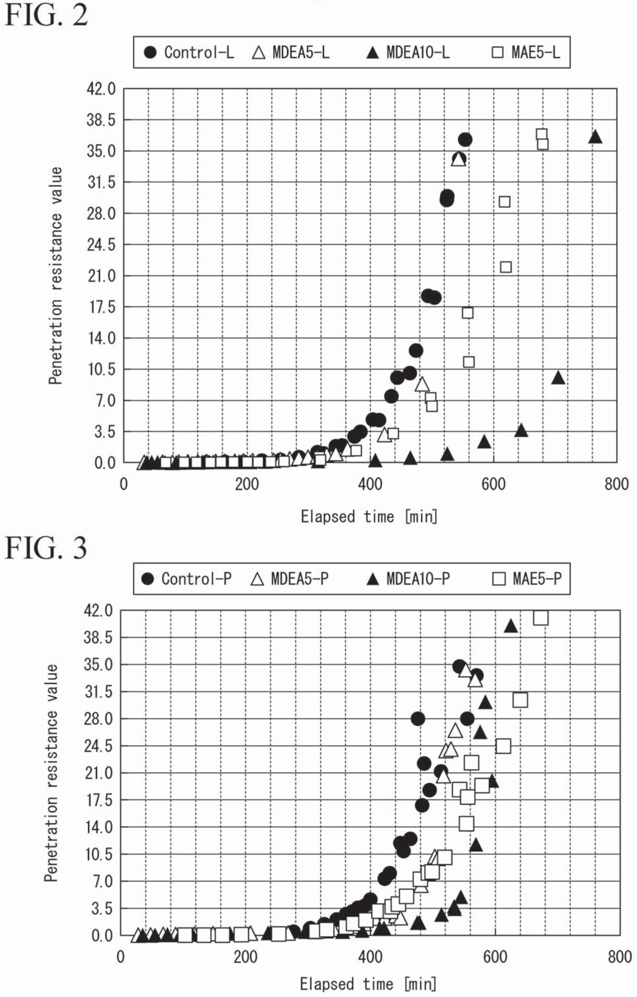

For each of the above cement compositions for carbon dioxide fixation, the setting rate was measured in accordance with JIS A 1147:2019 "Method of test for time of setting of concrete mixtures by penetration resistance". The results are shown in FIG. 2.

From the results shown in FIG. 2, it was found that when MDEA was used and when MAE was used, the setting rate tended to be delayed. When MDEA was used, it was found that a significant delay occurred at 10% by mass. When MAE was used, it was found that a delay occurred even at 5% by mass.

### [Experimental Example 5]

Four types of cement compositions for carbon dioxide fixation were obtained in the same manner as in Experimental Example 2.

### <Evaluations>

For each of the above cement compositions for carbon dioxide fixation, the setting rate was measured in accordance with JIS A 1147:2019 "Method of test for time of setting of concrete mixtures by penetration resistance". The results are shown in FIG. 3.

From the results shown in FIG. 3, it was found that when MDEA was used and when MAE was used, the setting rate tended to be delayed. When MDEA was used, it was found that a significant delay occurred at 10% by mass. When MAE was used, it was found that a delay occurred even at 5% by mass. In addition, it was found that when a lignin-based admixture was used, the tendency for setting delay was more pronounced.

### [Experimental Example 6]

A cement composition was prepared by the formulation shown in Table 6, and a cement composition for carbon dioxide fixation was obtained by adding a carbon dioxide absorbing liquid containing a carbon dioxide absorbent to the cement composition. A Hobart-type mixer was used for kneading the cement composition. Cement (C) was charged, followed by addition of water (W) and the carbon dioxide absorbent, and the resulting was kneaded to obtain a cement paste. Thereafter, the cement composition for carbon dioxide fixation was hardened to obtain a hardened cement for carbon dioxide fixation.

Using N-methyldiethanolamine (MDEA) as the carbon dioxide absorbent, carbon dioxide absorbing liquids were prepared with the following concentrations: 0 % by mass MDEA (water), 5 % by mass MDEA, 10 % by mass MDEA, 20 % by mass MDEA, and 30 % by mass MDEA.

**[Table 6]**

| Formulation name | Water/cement ratio | Carbon dioxide absorbing liquid concentration(outer percentage) |
|---|---|---|
| | (%) | (%) |
| Control | 50 | 0 |
| MDEA5 | 50 | 5 |
| MDEA10 | 50 | 10 |
| MDEA20 | 50 | 20 |
| MDEA30 | 50 | 30 |

### <Evaluations>

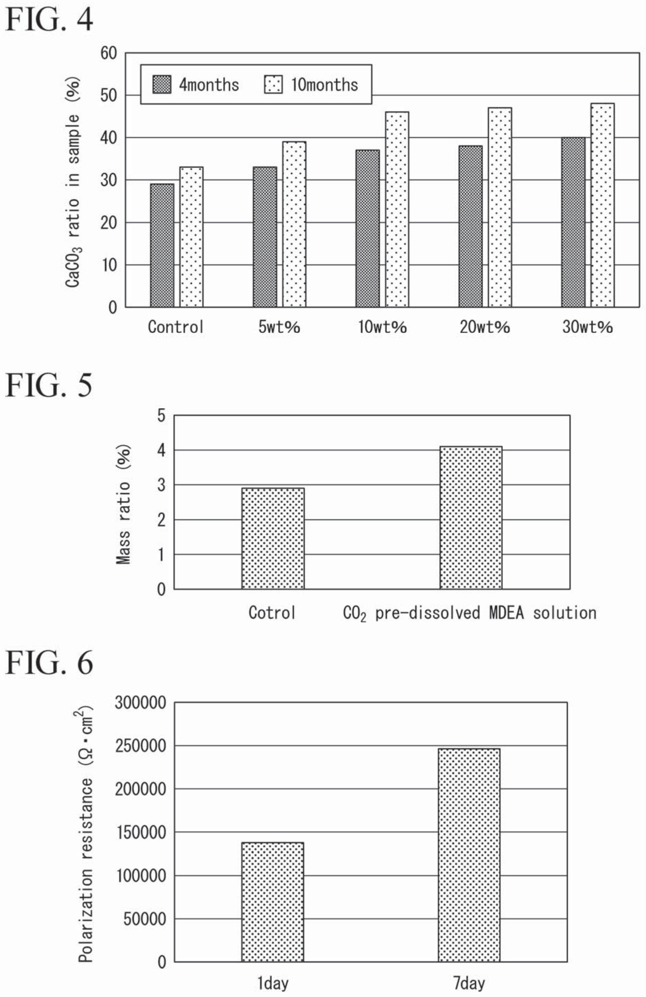

The hardened cement products for carbon dioxide fixation were sealed-cured for 28 days, crushed into pieces of approximately 10 mm, and then exposed to air. After 4 months and 10 months had elapsed, respectively, a sample was randomly selected from each hardened cement product for carbon dioxide fixation, pulverized, and 10 mg was taken. Using a thermogravimetry/differential thermal simultaneous analysis apparatus (TG/DTA), the amount of calcium carbonate (CaCO₃) in each hardened cement product for carbon dioxide fixation was measured. The results are shown in FIG. 4. From the results shown in Fig. 4, it was found that the higher the concentration of MDEA, the greater the amount of CaCO₃ generated in the hardened cement for carbon dioxide fixation. The amount of calcium carbonate generated is given in terms of the mass difference (mass loss) between the mass at 500°C and the mass at 800°C in TG/DTA.

### [Experimental Example 7]

A cement composition for carbon dioxide fixation was obtained using the formulation shown in Table 7. A Hobart-type mixer was used to knead cement (C) and the carbon dioxide absorbing liquid to obtain a cement composition for carbon dioxide fixation. Thereafter, the cement composition for carbon dioxide fixation was hardened to obtain a hardened cement for carbon dioxide fixation.

Using N-methyldiethanolamine (MDEA) as the carbon dioxide absorbent, carbon dioxide absorbing liquids were prepared with the following concentrations: 0 % by mass MDEA (water as a control), and 10 % by mass MDEA. Further, carbon dioxide was bubbled into the carbon dioxide absorbing liquid to dissolve carbon dioxide therein. The dissolved amount of carbon dioxide was 0.6 mol (CO₂ / MDEA mol).

**[Table 7]**

| Formulation name | Water/cement ratio | Carbon dioxide absorbing liquid (inner percentage) |
|---|---|---|
| | (%) | (%) |
| Control | 50 | - |
| MDEA5 | 50 | 5 |

### <Evaluations>

Each of the hardened cement products for carbon dioxide fixation was sealed-cured for 7 days, then crushed, and 10 mg was taken from each, and the amount of calcium carbonate (CaCO₃) in the hardened cement for carbon dioxide fixation was measured using TG/DTA. The evaluation method was the same as in Experimental Example 6. The results are shown in FIG. 5. From the results shown in Fig. 5, it was found that, by using a carbon dioxide absorbing liquid in which carbon dioxide had been dissolved, a larger amount of carbon dioxide was fixed. That is, the fixed amount of carbon dioxide varies depending on the amount of dissolved carbon dioxide.

### [Experimental Example 8]

A cement composition for carbon dioxide fixation was obtained by the formulation shown in Table 8. A Hobart-type mixer was used to knead cement (C) and the carbon dioxide absorbing liquid to obtain a cement composition for carbon dioxide fixation.

A piece of SS400 steel having an outer diameter of 25 mm and a thickness of 2.5 mm was set in the sample holder of a measurement jig, and the surface of the exposed steel (1 cm²) was filled with the cement composition for carbon dioxide fixation, which was then hardened to form a hardened cement for carbon dioxide fixation on the surface of the steel.

Using N-methyldiethanolamine (MDEA) as the carbon dioxide absorbent, a carbon dioxide absorbing liquid was prepared with MDEA concentration of 10 % by mass. Further, carbon dioxide was bubbled into the carbon dioxide absorbing liquid to dissolve carbon dioxide therein. The dissolved amount of carbon dioxide was 0.6 mol (CO₂ / MDEA mol).

**[Table 8]**

| Formulation name | Water/cement ratio | Carbon dioxide absorbing liquid (inner percentage) |
|---|---|---|
| | (%) | (%) |
| MDEA5 | 50 | 5 |

### <Evaluations>

After the hardened cement for carbon dioxide fixation was sealed-cured for 7 days, the polarization resistance of the steel in contact with the hardened cement for carbon dioxide fixation was measured using a potentiostat (HZ-PRO, manufactured by Hokuto Denko). The sample was immersed in the same solution as the carbon dioxide absorbing liquid used in the kneading, and the measurement was conducted by an electrochemical impedance method using a platinum rod as the counter electrode and a silver/silver chloride electrode as the reference electrode. The results are shown in Fig. 6. From the results shown in Fig. 6, the polarization resistance exceeded 130 kΩ, confirming that even when carbon dioxide was fixed in the initial stage, the steel inside was passivated.

### [Experimental Example 9]

A cement composition for carbon dioxide fixation was obtained by the formulation shown in Table 9. A Hobart-type mixer was used to knead cement (C) and the carbon dioxide absorbing liquid to obtain a cement composition for carbon dioxide fixation. Thereafter, the cement composition for carbon dioxide fixation was hardened to obtain a hardened cement for carbon dioxide fixation.

Using 1-(2-hydroxyethyl)piperazine (HEPZ) as the carbon dioxide absorbent, carbon dioxide absorbing liquids were prepared with the following concentrations: 0 % by mass HEPZ (water as a control), 2 % by mass HEPZ, and 10 % by mass HEPZ. Further, for the formulations PC2 and P10C, carbon dioxide was bubbled into the carbon dioxide absorbing liquids to dissolve carbon dioxide therein. The amount of dissolved carbon dioxide was 1.5 mol (CO₂ / HEPZ mol).

**[Table 9]**

| Formulation name | Water/cement ratio | HEPZ concentration in cement composition | Carbon dioxide bubbling |
|---|---|---|---|
| | (%) | (% by mass) | |
| XA | 60 | 0 | No |
| P2 | 60 | 0.74 | No |
| P2C | 60 | 0.74 | Yes |
| P10 | 60 | 3.6 | No |
| P10C | 60 | 3.6 | Yes |

### <Evaluations>

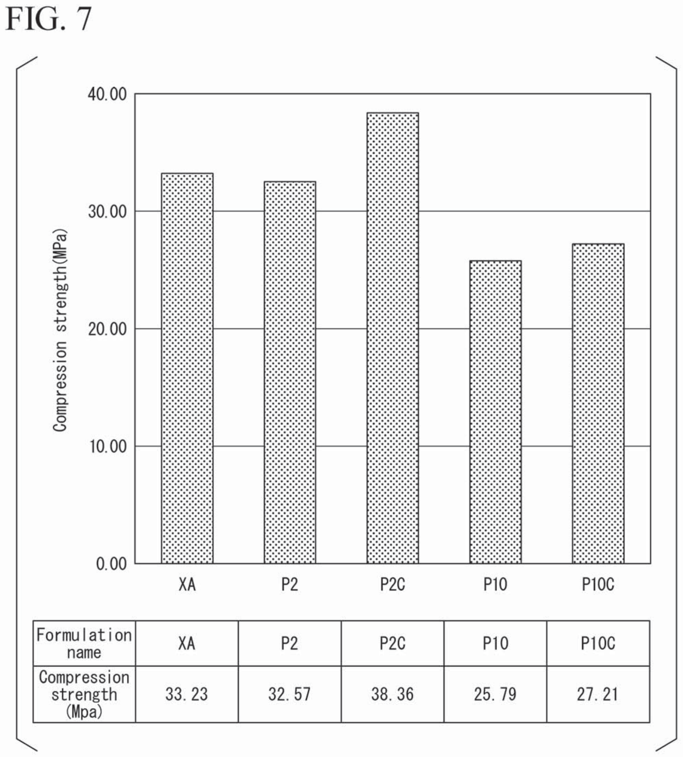

After the hardened cement products for carbon dioxide fixation were sealed-cured for 14 days, the compressive strength of each hardened cement for carbon dioxide fixation was measured in accordance with JIS A 1108:2018 "Method of test for compressive strength of concrete". The measurement was conducted using SHIMADZU UH-X. The results are shown in FIG. 7. From the results shown in Fig. 7, it was found that, by lowering the amine concentration in the cement composition, the compressive strength of the hardened cement for carbon dioxide fixation can be increased. It was also found that, by using a carbon dioxide absorbing liquid in which carbon dioxide had been dissolved, the compressive strength of the hardened cement for carbon dioxide fixation can be increased.

In addition, X-ray diffraction (XRD) measurements were conducted on the hardened cement products for carbon dioxide fixation of formulations P2 and P2C. The X-ray diffraction measurements were conducted using Rigaku smart lab. The results of the X-ray analysis are shown in Table 10.

**[Table 10]**

| Formulation name | Calcium hydroxide | Dicalcium silicate | Tricalcium silicate | Tetracalcium aluminferrate | Calcium carbonate | Hemicar-bonate | Unknown |
|---|---|---|---|---|---|---|---|
| P2 | 19.4 | 15.8 | 3.0 | 4.1 | 1.8 | 3.8 | 52.1 |
| P2C | 17.7 | 14.7 | 2.1 | 0.38 | 2.8 | 5.0 | 57.3 |

From the results shown in Table 10, it was found that, by using a carbon dioxide absorbing liquid in which carbon dioxide had been dissolved, C₃S, which is the main component of cement in the hardened cement for carbon dioxide fixation, decreases. That is, by using a carbon dioxide absorbing liquid in which carbon dioxide had been dissolved, the progress of the hydration reaction of cement is less inhibited. Further, it was found that, by using a carbon dioxide absorbing liquid in which carbon dioxide had been dissolved, calcite (calcium carbonate) increases. That is, by using a carbon dioxide absorbing liquid in which carbon dioxide had been dissolved, the amount of carbon dioxide adsorbed in the hardened cement for carbon dioxide fixation increases.

From the above, it was found that, according to the carbon dioxide fixation method of the present invention, carbon dioxide can be fixed in the hardened cement for carbon dioxide fixation.

In addition, it was found that, according to the carbon dioxide absorbing liquid relating to the carbon dioxide fixation method of the present invention, the anticorrosion effect of the hardened cement for carbon dioxide fixation can be further enhanced.

Furthermore, it was found that, by containing carbon dioxide in the carbon dioxide absorbing liquid relating to the carbon dioxide fixation method of the present invention, the compressive strength of the hardened cement for carbon dioxide fixation can be further increased.

## Claims

1. A cement composition for carbon dioxide fixation, comprising a cement composition and a carbon dioxide absorbing liquid containing a carbon dioxide absorbent.

2. The cement composition according to claim 1, wherein the carbon dioxide absorbing liquid has a pH of 8.0 or higher at 20°C.

3. The cement composition according to claim 1, wherein the carbon dioxide absorbing liquid contains carbon dioxide.

4. The cement composition according to claim 1, wherein an amount of the carbon dioxide absorbing liquid is 0.01 parts by mass or more and 100 parts by mass or less per 100 parts by mass of cement contained in the cement composition.

5. The cement composition according to claim 1, wherein the carbon dioxide absorbent is an alkaline compound.

6. The cement composition according to claim 1, wherein an amount of the carbon dioxide absorbent is 0.1 parts by mass or more and less than 5 parts by mass per 100 parts by mass of the cement composition.

7. The cement composition according to claim 1, wherein an amount of the carbon dioxide absorbent is 0.1 parts by mass or more and less than 5 parts by mass per 100 parts by mass of the cement composition, and the carbon dioxide absorbing liquid contains carbon dioxide.

8. The cement composition according to claim 1, wherein the carbon dioxide absorbent is an amine compound, an amount of the carbon dioxide absorbent is 0.1 parts by mass or more and less than 5 parts by mass per 100 parts by mass of the cement composition, and the carbon dioxide absorbing liquid contains carbon dioxide.

9. A hardened cement for carbon dioxide fixation, comprising a hardened cement and a carbonate supported on the hardened cement.

10. The hardened cement according to claim 9, wherein an amount of the carbonate is 0 parts by mass or more and 50 parts by mass or less per 100 parts by mass of the hardened cement.

11. The hardened cement according to claim 9, wherein the hardened cement is concrete.

12. A carbon dioxide fixation method comprising:
mixing a cement composition with a carbon dioxide absorbing liquid containing a carbon dioxide absorbent;
hardening the cement composition containing the carbon dioxide absorbent to obtain a hardened cement for carbon dioxide fixation; and
contacting the hardened cement with atmospheric air to fix the carbon dioxide contained in the atmospheric air in the hardened cement.

13. A carbon dioxide fixation method comprising:
mixing a cement composition with a carbon dioxide absorbing liquid containing a carbon dioxide absorbent and a pre-dissolved carbon dioxide;
hardening the cement composition containing the carbon dioxide absorbent to obtain a hardened cement for carbon dioxide fixation; and
contacting the hardened cement with atmospheric air to fix the carbon dioxide contained in the atmospheric air in the hardened cement.

## Amended claims

### Amended claims under Art. 19.1 PCT

1. A cement composition for carbon dioxide fixation, comprising a cement composition and a carbon dioxide absorbing liquid containing a carbon dioxide absorbent.

2. The cement composition according to claim 1, wherein the carbon dioxide absorbing liquid has a pH of 8.0 or higher at 20°C.

3. The cement composition according to claim 1, wherein the carbon dioxide absorbing liquid contains carbon dioxide.

4. The cement composition according to claim 1, wherein an amount of the carbon dioxide absorbing liquid is 0.01 parts by mass or more and 100 parts by mass or less per 100 parts by mass of cement contained in the cement composition.

5. The cement composition according to claim 1, wherein the carbon dioxide absorbent is an alkaline compound.

6. The cement composition according to claim 1, wherein an amount of the carbon dioxide absorbent is 0.1 parts by mass or more and less than 5 parts by mass per 100 parts by mass of the cement composition.

7. The cement composition according to claim 1, wherein an amount of the carbon dioxide absorbent is 0.1 parts by mass or more and less than 5 parts by mass per 100 parts by mass of the cement composition, and the carbon dioxide absorbing liquid contains carbon dioxide.

8. The cement composition according to claim 1, wherein the carbon dioxide absorbent is an amine compound, an amount of the carbon dioxide absorbent is 0.1 parts by mass or more and less than 5 parts by mass per 100 parts by mass of the cement composition, and the carbon dioxide absorbing liquid contains carbon dioxide.

9. A hardened cement for carbon dioxide fixation, comprising a hardened cement and a carbonate supported on the hardened cement.

10. The hardened cement according to claim 9, wherein an amount of the carbonate is 0 parts by mass or more and 50 parts by mass or less per 100 parts by mass of the hardened cement.

11. The hardened cement according to claim 9, wherein the hardened cement is concrete.

12. A carbon dioxide fixation method comprising:
mixing a cement composition with a carbon dioxide absorbing liquid containing a carbon dioxide absorbent;
hardening the cement composition containing the carbon dioxide absorbent to obtain a hardened cement for carbon dioxide fixation; and
contacting the hardened cement with atmospheric air to fix the carbon dioxide contained in the atmospheric air in the hardened cement.

13. A carbon dioxide fixation method comprising:
mixing a cement composition with a carbon dioxide absorbing liquid containing a carbon dioxide absorbent and a pre-dissolved carbon dioxide;
hardening the cement composition containing the carbon dioxide absorbent to obtain a hardened cement for carbon dioxide fixation; and
contacting the hardened cement with atmospheric air to fix the carbon dioxide contained in the atmospheric air in the hardened cement.

14. (Added) The cement composition according to claim 1, wherein the carbon dioxide absorbing liquid contains no carbon dioxide.

15. (Added) The cement composition according to claim 1, wherein an amount of the carbon dioxide absorbing liquid is 30 parts by mass or more and 65 parts by mass or less per 100 parts by mass of the cement contained in the cement composition.

16. (Added) The cement composition according to claim 1, wherein an amount of the carbon dioxide absorbent is 0.3 parts by mass or more and 3 parts by mass or less per 100 parts by mass of the cement composition.

17. (Added) A method for producing a cement composition for carbon dioxide fixation, comprising:
adding carbon dioxide to a carbon dioxide absorbing liquid containing a carbon dioxide absorbent; and
kneading a cement composition with the carbon dioxide absorbing liquid.

Statement under Art. 19.1 PCT
New claim 14 has been added based on in claim 1 as filed and paragraph [0020], etc. of the present specification.

New claim 15 has been added based on claim 1 as filed and paragraph [0021], etc. of the present specification.

New claim 16 has been added based on claim 7 as filed and paragraph [0027], etc. of the present specification.

New claim 17 has been added based on paragraphs [0028], [0029], etc. of the present specification.
